# EUROPÄISCHE PATENTSCHRIFT

(11) **EP 4 177 059 B1**
(45) Veröffentlichungstag und Bekanntmachung des Hinweises auf die Patenterteilung: **10.07.2024**
(21) Anmeldenummer: 21206894.4
(22) Anmeldetag: 08.11.2021
(51) Int. Cl.: B41F 33/00, B41M 3/00

(54) **VERFAHREN ZUR BESTIMMUNG EINER FARBABWEICHUNG VON MINDESTENS EINEM AUF EIN TRÄGERMATERIAL AUFGEBRACHTES DRUCKDEKOR VON EINER DRUCKVORLAGE**
METHOD FOR DETERMINING A COLOUR DEVIATION OF AT LEAST ONE PRINTING PATTERN APPLIED TO A CARRIER MATERIAL FROM A PRINTING TEMPLATE
PROCÉDÉ DE DÉTERMINATION D'UN ÉCART DE COULEURS D'AU MOINS UN DÉCOR IMPRIMÉ APPLIQUÉ À UNE MATIÈRE DE SUPPORT À PARTIR D'UNE MAQUETTE D'IMPRIMERIE

(43) Veröffentlichungstag der Anmeldung: 10.05.2023
(73) Patentinhaber: Flooring Technologies Ltd., Kalkara SCM1001 (MT)
(72) Erfinder: Kalwa, Norbert, 32805 Horn-Bad Meinberg (DE); Zhang, Jinming, 10247 Berlin (DE)
(74) Vertreter: Maikowski & Ninnemann Patentanwälte Partnerschaft mbB

(56) Entgegenhaltungen:
- EP-A1- 1 145 863
- EP-A1- 2 777 942
- EP-A1- 3 428 619
- US-A- 5 812 705

## Beschreibung

Die vorliegende Erfindung betrifft ein Verfahren zur Bestimmung einer Farbabweichung bzw. Farbänderung von mindestens einem Druckdekor, welches auf mindestens ein Trägermaterial aufgebracht ist, von einer Druckvorlage bzw. Urdekor oder Urmuster.

### Beschreibung

Mit einem Dekor versehene Trägermaterialien, wie z.B. Holzwerkstoffplatten oder Papierlagen, werden hauptsächlich im Tiefdruckverfahren oder Digitaldruckverfahren bedruckt.

Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand wie z.B. ein Trägermaterial übertragen.

Beim Digitaldruck hingegen wird das Druckbild direkt von einem Computer in eine Druckmaschine wie z.B. einem Laserdrucker oder Tintenstrahldrucker übertragen. Dabei entfällt die Verwendung einer statischen Druckform.

Im Stand der Technik sind Drucktechniken und Ansätze zu deren Steuerung beschrieben. So betrifft EP 2 777 942 A1 ein Verfahren zur Erzeugung von Dekordrucken mit gleicher Qualität unabhängig von dem angewendeten Druckverfahren. Der US 5,81 2,705 sind eine Vorrichtung und ein Verfahren zur automatischen Ausrichtung von Bildern für ein Steuerungssystem einer Druckpresse zu entnehmen. Das Steuerungssystem weist einen 4-Kanalsensor, einen Datenwandler zur Verarbeitung der Informationen des Sensors und eine Vorrichtung zur Steuerung der Tinte für die Presse auf.

Im Rahmen der technischen Weiterentwicklung der Drucktechnologie von verschiedensten Trägermaterialien wird zunehmend auf den Digitaldruck gesetzt. Während digitale Druckverfahren zunächst vor allem in der graphischen Industrie wie z.B. Werbeagenturen, Werbemittelhersteller oder Druckereien Anwendung fanden, zeigt sich mittlerweile, dass digitale Druckverfahren auch häufiger in anderen Industriezweigen anzutreffen sind. Hierfür gibt es zwar vielfältige Gründe, wobei sich jedoch zwei wesentliche Argumente erkennen lassen. So ermöglicht der Digitaldruck die Herstellung eines Druckbildes mit einer besonders hohen Qualität durch eine höhere Auflösung und erlaubt des Weiteren ein breiteres Anwendungsspektrum bei hoher Flexibilität. Dies verdeutlicht sich durch die Tatsache, dass keine Limitierung des Druckbildes im Hinblick auf die Länge mehr gegeben ist.

Beim Druck von Dekoren stellt ein großes Problem das Auftreten von Farbabweichungen dar. Dies gilt unabhängig von den Druckverfahren und auch unabhängig von den Industrien.

Fast überall werden heute schnelle Druckverfahren angewendet, bei denen in sehr kurzer Zeit große Mengen an bedruckten Oberflächen/ Produkten erzeugt werden und somit der Schaden bei Farbabweichungen u. U. erheblich ist. Moderne Druckmaschinen laufen - je nach Industrie - mit bis zu mehreren hundert Metern pro Minute.

Dies gilt insbesondere auch für das Bedrucken von Papier, da Papier aus einem nachwachsenden Rohstoff hergestellt wird, wodurch Eigenschaftsschwankungen stärker ausgeprägt sind als bei anderen Substraten. Zudem ist das Substrat Papier in den meisten Fällen beim Bedrucken relativ dünn, was Eigenschaften, die u. a. von der Dicke abhängen (Luftdurchlass, Glätte usw.) stärker qualitätsrelevant werden lässt. Weiterhin ist problematisch, dass Papier nur sehr selten mit Unifarben bedruckt wird. Diese sind bezüglich der Beurteilung der Farbkonstanz deutlich günstiger als Holzreproduktionen, Steindekore oder Phantasiedekore.

Die üblicherweise angewendete Methode zur Prüfung der Farbgleichheit ist die Betrachtung der aktuellen Produktion im Vergleich zu einem Urmuster bzw. einer Druckvorlage unter normierten Bedingungen (Lichtverhältnisse, Betrachtungsabstand und -winkel). Allerdings muss dazu die Produktion gestoppt werden, ein repräsentatives Muster entnommen werden und nach Begutachtung die Produktion wieder angefahren werden. Dies benötigt Zeit und erhöht die Kosten. Zudem erlaubt diese Vorgehensweise keine kontinuierliche Überwachung, die in einem modernen Produktionsprozess gewünscht ist.

In jüngster Zeit hat man zur Lösung des Problems Scanner eingesetzt, die permanent den aktuellen Druck mit einem vereinbarten Urmuster vergleichen. Dieses Verfahren ist aber technisch sehr aufwändig.

Es ergeben sich somit folgende Nachteile: aufwändiges System; hohe Kosten; Produktionsverluste durch Qualitätsprüfung.

Der Erfindung liegt daher die technische Aufgabe zu Grunde mit einem einfachen Messsystem Farbabweichungen erkennbar zu machen. Dies sollte an die Voraussetzungen zur Messung keine hohen Ansprüche stellen. Zudem sollte es sowohl für eine in-line / on-line- als auch für eine off-line-Messung geeignet sein. Das System sollte wegen der hohen Produktionsgeschwindigkeiten an den Druckmaschinen schnell Messwerte erzeugen, wenn möglich mehrere Messwerte pro Sekunde. Auch sollten die erzeugten Messwerte eine schnelle Beurteilung ermöglichen.

Diese Aufgabe wird erfindungsgemäß durch ein Verfahren mit den Merkmalen des Anspruchs 1 gelöst.

Demnach wird ein Verfahren zur Bestimmung der Farbabweichung bzw. Farbänderungen von mindestens einem Druckdekor von einer Druckvorlage bzw. einem Urmuster bereitgestellt, wobei das mindestens eine Druckdekor auf mindestens ein Trägermaterial aufgebracht ist. Das vorliegende Verfahren umfasst die folgenden Schritte:
- Aufnahme von mindestens einem NIR-Spektrum von mehreren Referenzproben mit der Druckvorlage bzw. dem Urmuster unter Verwendung von mindestens einem NIR-Messkopf in einem Wellenlängenbereich zwischen 900 nm und 2500 nm,
- Aufbringen von dem mindestens einen Druckdekor auf das mindestens eine Trägermaterial mittels Bedrucken,
- Aufnehmen von mindestens einem NIR-Spektrum des mit dem Druckdekor bedruckten Trägermaterials unter Verwendung des mindestens einen NIR-Messkopfes in einem Wellenlängenbereich zwischen 900 nm und 2500 nm,
- Bestimmen der Farbabweichung des Druckdekors von der Druckvorlage in einem Wellenlängenbereich zwischen 1350 und 1600 nm bei einer parallelen Verschiebung der gemessenen NIR-Spektren des Druckdekors von den gemessenen NIR-Spektren der Druckvorlage , oder
- Bestimmen der Farbabweichung des Druckdekors von der Druckvorlage in verschiedenen Wellenlängenbereichen, wobei der Wellenlängenbereich des Druckdekors zwischen 1100 und 1200 nm und der Wellenlängenbereich der Druckvorlage zwischen 1400 und 1600 nm liegt.

Eine Quantifizierung ergibt sich aus dem Abstand der beiden oder mehreren Linien des Spektrums. Die Farbunterschiede ( Abstände der Spektren ) hängen u. A. von der Art des Dekors ( hell, mittel-hell, dunkel) ab. Da keine Kalibrierung durchgeführt wird, ist zunächst bei jedem Druck bei der aktuellen Produktion eine Beurteilung nötig. Das bedeutet, das der Farbabstand des aktuellen Drucks zum Urmuster auch visuell zu begutachten ist. Aus dieser Begutachtung über mehrere Produktionen kann dann eine Grenze festgelegt werden, insbesondere unter Verwendung von geeigneter Software.Solange sich der Druck bei weiteren Produktionen innerhalb der so ermittelten Grenze(n) bewegt, kann dann die Produktion weiterlaufen. Ist der Druck außerhalb der Grenze, so muss nachgesteuert werden.

Demnach ist für jedes Dekor eine separate Beurteilung nötig. Die Abstände der Spektren hängen stark vom Dekor ab. Bei den Messungen hat sich z. B. auch gezeigt, dass das Spektrum einer sehr starken Farbabweichung zwischen dem Spektrum des Urmusters und dem Spektrum einer geringen Farbabweichung lag.

Wie in den Figuren der Ausführungsbeispiele zu erkennen ist, kann sich die Farbabweichung in einer parallelen Verschiebung des gemessenen NIR-Spektrums ergeben. Bei einer parallelen Verschiebung des gemessenen NIR-Spektrums wird die NIR-Messung der Referenzproben und der zu vermessenden Proben erfindungsgemäß bei eingegrenzten Wellenlängenbereichen zwischen 1350 nm und 1600 nm durchgeführt..

Es kann aber auch der Fall eintreten, dass die Farbabweichung nicht zu einer parallelen Verschiebung des gemessenen NIR-Spektrums führt, sondern vielmehr, dass Abweichungen jeweils in anderen Bereichen des NIR-Spektrums auftreten. So sind erfindungsgemäß die Farbabweichungen in zu vermessenden Proben vom Urmuster anhand von Absorptionspeaks in verschiedenen Wellenlängenbereichen erkennbar ; z.B. Absorptionspeaks für die zu vermessende Probe in einem Wellenlängenbereich zwischen 1100 - 1200 nm und für das Urmuster in einem Wellenlängenbereich zwischen 1400- 1600 nm.

Gemäß dem vorliegenden Verfahren wird unter Verwendung eines NIR-Messkopfes ein NIR-Spektrum für ein Dekor erzeugt. Dabei regt die NIR-Strahlung die organischen Farbmoleküle, die üblicherweise im indirekten Tiefdruck und im Digitaldruck eingesetzt werden, zum Schwingen an. Dieser energieverbrauchende Prozess kann dann in Form eines Spektrums detektiert werden. Da dieses Messverfahren relativ schnell eine Vielzahl von Spektren erzeugt, sind Abweichungen von der gewünschten Qualität (Urmuster) schnell detektierbar. Dabei erfolgt nur ein einfacher Vergleich des aktuellen Spektrums mit dem hinterlegten Urmusterspektrum.

Es hat sich erstaunlicherweise gezeigt, dass selbst geringe Farbabweichungen mit diesem Verfahren erkennbar sind. Selbst Farbabweichungen, die vom Betrachter noch akzeptabel in Bezug auf das Urmuster beurteilt werden, sind im NIR-Spektrum deutlich unterscheidbar. Dabei ist eine klare Tendenz von sehr hellen zu sehr dunklen Dekoren erkennbar, d. h. dass die Abstände der Spektren bei dunklen Dekoren deutlicher sind als bei hellen Dekoren. Durch die Festlegung von Maximalabständen zwischen den Spektren kann ein Eingreifpunkt definiert werden, ab dem Maßnahmen zur Farbkorrektur eingeleitet werden. Zum kann auch durch eine Visualisierung über die Zeit ein Trend sichtbar gemacht werden.

Bei dem Verfahren können sowohl Einzelspektren eines definierten Dekorausschnittes oder ein Durchschnittspektrum über die laufende Warenbahn aufgenommen werden. Damit kann sowohl eine off-line- als auch eine in-line-Kontrolle realisiert werden. Zu diesem Zweck wird entweder eine Probe entnommen und off-line untersucht oder der NIR-Messkopf auf dem bedruckten Papier in einem definierten Abstand vom Rand positioniert. Durch die Auswertung des Spektrums kann auch im Vergleich zum Urmuster festgestellt werden, welche Farbe des Farbsatzes (z. B. CMYK beim Digitaldruck) nachreguliert werden muss. Dies kann über eine Software automatisch nachgesteuert werden.

Das vorliegende Verfahren bietet verschiedene Vorteile. So wird ein einfaches Messverfahren mit einer sehr empfindliche Messmethode zur Verfügung gestellt. Das Verfahren ist Off-line und on-line bzw. in-line einsetzbar und zudem einfach installierbar. Insbesondere kann die Bestimmung der Farbabweichung kontinuierlich und online erfolgt.

Das vorliegende Verfahren ermöglicht die Bereitstellung der Messwerte in kurzer Zeit (online, bevorzugt ohne störende Zeitverzögerung) im Vergleich zu herkömmlichen (bekannten) Messverfahren. Die Messdaten können zur Qualitätssicherung, Forschung und Entwicklung, zur Prozesskontrolle, -regelung, -steuerung usw. eingesetzt werden. Durch den Messvorgang wird die Produktionsgeschwindigkeit usw. nicht reduziert. Grundsätzlich wird damit die Überwachung der Produktion verbessert. Zudem werden auch Stillstandszeiten durch Qualitätsbestimmungen und Anlagenjustierungen reduziert.

Es werden zunächst Referenzproben von mit einer Druckvorlage als Ausgangsdekor oder Urmuster versehenen Trägermaterials bereitgestellt. Wesentlich ist, dass die Referenzprobe, insbesondere in Bezug auf das Trägermaterial und dessen Bearbeitungsgrad gleichartig zu der zu vermessenden Probe ist. Die Gleichartigkeit von zu vermessender Probe und Referenzprobe ist insbesondere bei Verwendung von beharzten Trägermaterialien, wie z.B. vorimpägnierten Papierlagen wesentlich.

Wie oben ausgeführt, wird von diesen Referenzproben zumindest ein NIR-Spektrum in einem Wellenlängenbereich zwischen 900 nm und 2500 nm aufgenommen; d.h. es wird der gesamte Wellenlängenbereich des NIR-Spektrums zugrunde gelegt. In Abhängigkeit von den zu vermessenden Mustern und den auftretenden Abweichungen der NIR-Spektren kann auch ein NIR-Spektrum in einem eingegrenzten Wellenlängenbereich zwischen zwischen 900 nm und 1700 nm und besonders vorteilhaft zwischen 1350 nm und 1600 nm aufgenommen werden. So wird z.B, für die Vermessung des Holzdekors Esche grau ein NIR-Spektrum in einem Wellenlängenbereich von 950 bis 1650 nm aufgenommen.

Anschließend wird mindestens ein Druckdekor auf das mindestens eine Trägermaterial mittels Bedrucken, insbesondere im Tiefdruck oder Digitaldruck, aufgebracht und mindestens ein NIR-Spektrum des mit dem Druckdekor bedruckten Trägermaterials aufgenommen.

Der gewünschte Parameter des bedruckten Trägermaterials (hier die Farbabweichung vom Urmuster bzw. Ausgangsdekor) kann dann durch einen Vergleich des für das bedruckte Trägermaterial aufgenommenen NIR-Spektrums mit dem Referenzproben bestimmt werden.

Es ist somit möglich, aus einem einzigen für die zu vermessende Probe ermittelten NIR-Spektrum durch einen automatisierten Vergleich bzw. Abgleich mit den für die jeweilige Referenzprobe bestimmten NIR-Spektren die Farbabweichung zu bestimmen.

Ein Vergleich und die Interpretation der NIR-Spektren sowie Bestimmung der Farbabweichung erfolgt sinnvollerweise über den gesamten aufgenommenen Spektralbereich.

In einer Ausführungsform des vorliegenden Verfahrens umfasst das mindestens eine Trägermaterial mindestens eine Papierlage, insbesondere mindestens ein Rohpapier oder mindestens ein vorbehandeltes, imprägniertes Papier.

In einer anderen Ausführungsform des vorliegenden Verfahrens umfasst das mindestens eine Trägermaterial eine Platte aus einem Holzwerkstoff, insbesondere eine Span-, mitteldichte Faser (MDF)-, hochdichte Faser (HDF)-, Oriented Strand Board (OSB)- oder Sperrholzplatte, aus Kunststoff, einem Holzwerkstoff-Kunststoff-Gemisch oder einem Verbundwerkstoff, eine Zementfaserplatte, Gipsfaserplatte oder eine WPC-Platte (Wood Plastic Composites) oder eine SPC-Platte (Stone Plastic Composites).

Wie bereits oben erwähnt, wird das Druckdekor bevorzugt in Tiefdruckverfahren oder Digitaldruckverfahren auf das mindestens eine Trägermaterial aufgebracht.

Diese Druckverfahren, insbesondere das digitale Drucken, werden heute fast ausschließlich unter Verwendung des Farbsystems CMYK durchgeführt. Das CMYK Farbmodell ist ein subtraktives Farbmodell, wobei die Abkürzung CMYK für die drei Farbbestandteile Cyan, Magenta, Yellow (gelb) und den Schwarzanteil Key als Farbtiefe steht. Mit diesem Farbsystem lässt sich ein Farbraum (Gamut) abbilden, der vielen Anforderungen aus verschiedensten Bereichen genügt.

Trotzdem ist der CMYK Farbraum ein Kompromiss, der dazu führt, dass bestimmte Farben entweder gar nicht erzeugt werden können oder dazu dann doch der Einsatz zusätzlicher Farben nötig wird. Dieses Problem stellt sich besonders bei der Reproduktion von Holzdekoren in der Möbel- oder Laminatbodenindustrie, wobei verschiedene Brauntöne erzeugt werden müssen.

In einer weiteren Ausführungsform wird daher eine Tinte mit einer modifizierten Pigmentzusammensetzung verwendet. Entsprechend ist die für den Druck verwendete Tinte eine wasserlösliche CRYK Tinte, die die folgende Zusammensetzung aufweist:
- Farbbestandteil C: mindestens ein Cyanpigment;
- Farbbestandteil K: mindestens ein schwarzes Kohlenstoffpigment;
- Farbbestandteil Y: mindestens ein gelbes Pigment; oder eine Mischung aus mindestens zwei verschiedenen gelben Pigmenten oder eine Mischung aus mindestens einem gelben Pigment und mindestens einem roten Pigment;
- Farbestandteil R: mindestens ein rotes Pigment, oder eine Mischung aus mindestens zwei verschiedenen roten Pigmenten oder eine Mischung aus mindestens einem roten Pigment und mindestens einem gelben Pigment.

Mit dieser CRYK Tintenzusammensetzung ist es möglich, Dekore auf verschiedenen Trägermaterialien bereitzustellen, die im Farbraum in Richtung orange-rot verschoben sind.

Die erfindungsgemäße Verwendung einer Mischung bzw. Kombination aus roten und gelben Pigmenten für die Farbbestandteile R und Y in der Drucktinte ermöglicht hingegen die gewünschte Verschiebung des Farbraumes unter Erhöhung des orange-roten Farbanteils. Dieser Farbraum ist für einen wärmeren Farbton oder Anmutung z.B. von Holzdekoren im analogen Druck bzw. Tiefdruck angepasst. Zu beachten ist, dass im analogen Druckverfahren üblicherweise mindestens 5 Grundfarben verwendet werden, während der Digitaldruck auf 4 Grundfarben beschränkt ist. So ist es mit der vorliegenden Tinte möglich, diesen größeren Farbraum sowohl im analogen Druck als auch im Digitaldruck zu verwenden, ohne dass dabei Veränderungen auftreten, die zu unerwünschten Metamerie-Effekten führen würden. Als Trägermaterialien können nun einerseits weiß grundierte Holzwerkstoffplatten und andererseits weiße geprimerte Papiere eingesetzt werden. Sofern auf beiden Trägermaterialien das gleiche Dekor mit Farbsätzen mit den genannten Pigmenten gedruckt wird, wird die Metamerie weitgehend vermieden. Gleichzeitig werden die Kosten verringert.

In einer Ausführungsform der vorliegend verwendeten Tinte ist der Farbbestandteil Y eine Mischung aus zwei gelben Pigmenten oder eine Mischung aus einem gelben Pigment und einem roten Pigment oder eine Mischung aus zwei gelben Pigmenten und einem roten Pigment ist.

Als gelbe Pigmente können vorliegend PY150, 151, 154, 175, 180 oder 194 verwendet werden, wobei PY150 und PY181 bevorzugt sind. PY181 und PY151 sind Benzimidazolonazopigmente, wobei PY181 jedoch andere Substituenten als PY151 aufweist. So enthält PY181 als R4 Substituent eine Amidobenzol-Seitenkette, während PY151 an derselben Position lediglich ein Wasserstoff aufweist. PY181 weist eine gute Säure- und Basenstabilität sowie Lösemittelstabilität auf und ist gut dispergierbar.

In einer bevorzugten Ausführungsform ist der Farbbestandteil Y eine Mischung aus einem ersten gelben Grundpigment und bis zu 30 Gew%, bevorzugt bis zu 20 Gew% eines zweiten gelben Pigmentes ist, insbesondere eine Mischung aus PY 150 und 20 Gew% PY181 (Gew% sind jeweils auf den Farbbestandteil Y bezogen).

In einer weiteren bevorzugten Ausführungsform ist der Farbbestandteil Y eine Mischung aus einem ersten gelben Grundpigment und bis zu 10 Gew%, bevorzugt bis zu 5 Gew% eines roten Pigmentes, insbesondere aus der Gruppe der Chinacridon-Pigmente, insbesondere eine Mischung aus PY150 und 5 Gew% PR 207 (Gew% sind jeweils auf den Farbbestandteil Y bezogen).

Das rote Chinacridon-Pigment gehört zu einer Gruppe organischer Pigmente, die sich von der Grundstruktur des Chinacridons ableiten. Sie weisen eine sehr gute Wetterechtheit, hohe Farbstärke und hohe chemische Beständigkeit auf. Das verwendete rote Pigment ist bevorzugt ausgewählt aus der Gruppe enthaltend 2,9-Dimethylchinacridon (Pigment Red 122), 2,9-Dichlorchinacridon (Pigment Red 202), Mischkristall aus Chinacridon und 4, 11 - Dichlorchinacridon (Pigment Red 207) und 3,10-Dichlorchinacridon (Pigment red 209). Das rote Pigment PR207 als Mischkristall aus Chinacridon und 4, 11 - Dichlorchinacridon wird besonders bevorzugt verwendet. Ein Mischkristall ist als eine feste Lösung zu verstehen, die sich von einer rein physikalische Mischung der Einzelkomponenten unterscheidet. In einer festen Lösung sind z.B. die Moleküle einer Komponente in das Kristallgitter der anderen Komponente eingebaut. PR207 wird mit einer gelblich-roten Farbe beschrieben.

In einer weiteren bevorzugten Ausführungsform der vorliegend verwendeten Tinte ist der Farbbestandteil Y eine Mischung aus einem ersten gelben Grundpigment, bis zu 20 Gew%, bevorzugt bis zu 15 Gew% eines zweiten gelben Pigmentes und bis zu 10 Gew%, bevorzugt bis zu 5 Gew% eines roten Pigmentes, insbesondere aus der Gruppe der Chinacridon-Pigmente, insbesondere eine Mischung aus PY150, 15 Gew% PY181 und 5 Gew% PR207 (Gew% sind jeweils auf den Farbbestandteil Y bezogen).

In einer anderen Ausführungsform der vorliegend verwendeten Tinte ist der Farbbestandteil R eine Mischung aus zwei roten Pigmenten oder eine Mischung aus einem roten Pigment und einem gelben Pigment oder Mischung aus zwei roten Pigmenten und einem gelben Pigment.

So kann in einer Variante vorgesehen sein, dass der Farbbestandteil R eine Mischung aus einem ersten roten Grundpigment und bis zu 60 Gew%, bevorzugt bis zu 50 Gew% eines zweiten roten Pigmentes, insbesondere aus der Gruppe der Chinacridon-Pigmente ist, insbesondere eine Mischung aus PR254 und 50 Gew% PR207 ist (Gew% sind jeweils auf den Farbbestandteil R bezogen).

Das rote Pigment PR254 gehört zu der Klasse der Diketopyrrolopyrrol-Pigmente und wird mit einer gelblich-roten Farbe beschrieben. PR254 wird bevorzugt in Automobillacken verwendet. Es können aber auch andere rote Pigmente anstatt des PR254 zum Einsatz kommen, wie z.B. PR266, 122, 202, 207.

In einer weitergehenden Ausführungsvariante der vorliegend verwendeten Digitaldrucktinte ist der Farbbestandteil R eine Mischung aus eine Mischung aus einem roten Pigment, insbesondere aus der Gruppe der Chinacridon-Pigmente und einem gelben Pigment, insbesondere eine Mischung aus PR207 und PY181. Die Menge an PY181 beträgt 5-15 Gew%, bevorzugt 6-10 Gew% (Gew% sind jeweils auf den Farbbestandteil R bezogen).

In einer noch weitergehenden Ausführungsvariante der vorliegend verwendeten Digitaldrucktinte ist der Farbbestandteil R eine Mischung aus einem ersten roten Grundpigment, bis zu 60 %, bevorzugt bis zu 50% eines zweiten roten Pigmentes, insbesondere aus der Gruppe der Chinacridon-Pigmente, und einem gelben Pigment, insbesondere eine Mischung aus PR254, 50 Gew% PR207 und PY181. Die Menge an PR207 beträgt ca. 50 Gew% und die Menge an PY181 beträgt 3-10 Gew%, bevorzugt 3-5 Gew% (Gew% sind jeweils auf den Farbbestandteil R bezogen).

Die vorliegende CRYK-Digitaldrucktinte kann in den folgenden Kombinationen der Farbbestandteil R und Y verwendet, wobei jeweils mindestens ein Cyanpigment als Farbbestandteil C und mindestens ein schwarzes Kohlenstoffpigment als Farbbestandteil K vorliegen:
a) Farbbestandteil Y: Mischung aus zwei gelben Pigmenten; Farbbestandteil R: ein rotes Pigment;
b) Farbbestandteil Y: Mischung aus einem gelben Pigment und einem roten Pigment, insbesondere aus der Gruppe der Chinacridon-Pigmente; Farbbestandteil R: ein rotes Pigment;
c) Farbbestandteil Y: Mischung aus zwei gelben Pigmenten und einem roten Pigment, insbesondere aus der Gruppe der Chinacridon-Pigmente; Farbbestandteil R: ein rotes Pigment;
d) Farbbestandteil Y: ein gelbes Pigment; Farbbestandteil R: Mischung aus zwei roten Pigmenten, wobei eines der roten Pigmente bevorzugt aus der Gruppe der Chinacridon-Pigmente ist;
e) Farbbestandteil Y: Mischung aus zwei gelben Pigmenten; Farbbestandteil R: Mischung aus zwei roten Pigmenten, wobei eines der roten Pigmente bevorzugt aus der Gruppe der Chinacridon-Pigmente ist;
f) Farbbestandteil Y: Mischung aus einem gelben Pigment und einem roten Pigment, insbesondere aus der Gruppe der Chinacridon-Pigmente; Farbbestandteil R: Mischung aus zwei roten Pigmenten, wobei eines der roten Pigmente bevorzugt aus der Gruppe der Chinacridon-Pigmente ist;
g) Farbbestandteil Y: Mischung aus zwei gelben Pigmenten und einem roten Pigment, insbesondere aus der Gruppe der Chinacridon-Pigmente; Farbbestandteil R: Mischung aus zwei roten Pigmenten, wobei eines der roten Pigmente bevorzugt aus der Gruppe der Chinacridon-Pigmente ist;
h) Farbbestandteil Y: ein gelbes Pigment; Farbbestandteil R: Mischung aus zwei roten Pigmenten, wobei eines der roten Pigmente bevorzugt aus der Gruppe der Chinacridon-Pigmente ist, und einem gelben Pigment
i) Farbbestandteil Y: Mischung aus zwei gelben Pigmenten; Farbbestandteil R: Mischung aus zwei roten Pigmenten, wobei eines der roten Pigmente bevorzugt aus der Gruppe der Chinacridon-Pigmente ist, und einem gelben Pigment
j) Farbbestandteil Y: Mischung aus einem gelben Pigment und einem roten Pigment, insbesondere aus der Gruppe der Chinacridon-Pigmente; Farbbestandteil R: Mischung aus zwei roten Pigmenten, wobei eines der roten Pigmente bevorzugt aus der Gruppe der Chinacridon-Pigmente ist, und einem gelben Pigment
k) Farbbestandteil Y: Mischung aus zwei gelben Pigmenten und einem roten Pigment, insbesondere aus der Gruppe der Chinacridon-Pigmente; Farbbestandteil R: Mischung aus zwei roten Pigmenten, wobei eines der roten Pigmente bevorzugt aus der Gruppe der Chinacridon-Pigmente ist, und einem gelben Pigment

Zu beachten ist, dass die verschiedenen Farbpigmente für den Farbbestandteil R und den Farbbestandteil Y vor dem Auftrag jeweils kombiniert bzw. vermischt werden.

In einer Ausführungsform der im vorliegenden Verfahren verwendeten Tinte ist das mindestens eine Cyanpigment ein Kupferphthalocyaninpigment, bevorzugt C.I. Pigment Blue (PB) 15:3 oder C.I. Pigment Blue 15:4, insbesondere bevorzugt C.I. Pigment Blue 15:3 ist.

In einer weiteren Ausführungsform der im vorliegenden Verfahren verwendeten Tinte ist das schwarze Kohlenstoffpigment ein Russpigment, insbesondere ausgewählt aus der Gruppe Regal^{™} 400R, Mogul^{™}, L, Elftex^{™} 320 from Cabot Co., or Carbon Black FW18, Special Black^{™} 250, Special Black^{™} 350, Special Black^{™} 550, Printex^{™} 25, Printex^{™} 35, Printex^{™} 55, Printex^{™} 90, Printex^{™} 150T from DEGUSSA Co., MA8 from MITSUBISHI CHEMICAL Co., and C.I. Pigment Black (PBL) 7 and C.I. Pigment Black 11.

Die Gesamtpigmentkonzentration in der vorliegend verwendeten Tinte, liegt bei mehr als 8 Gew.-%, bevorzugt zwischen 6 und 15 Gew%, insbesondere bevorzugt zwischen 4 und 10 Gew%, bezogen auf das Gesamtgewicht der Tinte. Die Pigmentgesamtkonzentration ändert sich unwesentlich beim Mischen - lediglich der Anteil der einzelnen Pigmente wird beim Mischen geändert.

Wie bereits erwähnt handelt es sich bei der vorliegend verwendeten Tinte um eine wässrige Tinte. Der Wasseranteil in der Tinte liegt bei mindestens 50% liegt, bevorzugt bei über 50%, insbesondere bevorzugt bei mindestens 55% liegt. z.B. bei 51%, 52% oder 53%.

Die vorliegend verwendete Tinte weist ebenfalls einen Lösemittelanteil auf. So enthält die Tinte mindestens ein organisches Lösemittel mit einem Anteil von weniger als 45%, bevorzugt von weniger als 43%; z.B. 41%, 42%.

Das organische Lösemittel hält die Tinte, insbesondere in Kombination mit weiteren Additiven wie z.B. Dispergierhilfsmitteln, in einer verarbeitungsfähigen Konsistenz. Als organisches Lösemittel kann Glykol oder weitere Alkohole, wie Ethanol verwendet werden.

Darüber hinaus kann die vorliegend verwendete Tinte weitere Additive wie Biozide, Befeuchtungsmittel, Säure / Basen zur Einstellung des pH-Wertes, Tenside als oberflächenaktive Stoffe aufweisen. Als Befeuchtungsmittel können u.a. 2-Pyrrolidon, Glycerol und 1,2-Hexandiol in einer Menge zwischen 0,1 und 25 Gew-%, bezogen auf das Gesamtgewicht der wässrigen Tintenstrahltinte, enthalten sein.

Wie oben bereits erwähnt, können mit dem vorliegenden Verfahren verschiedene Trägermaterialien, wie Papierlagen oder Holzwerkstoffplatten, bedruckt werden.

So ist das mindestens eine zu bedruckende Trägermaterial in einer Ausführungsform mindestens ein Rohpapier. Unter Rohpapieren sind dabei solche Papiere zu verstehen, die weder einer Leimung in der Masse noch eine Imprägnierung der Oberfläche mit einem Harz oder Leim ausgesetzt waren. Rohpapiere bestehen im Wesentlichen aus Zellstoffen, Pigmenten und Füllstoffen und üblichen Additiven. Zur Herstellung der von Rohpapieren wie zum Beispiel Dekorpapieren können Nadelholz-Zellstoffe, Laubholz-Zellstoffe, oder Mischungen beider Zellstoffarten verwendet werden. Zur Einfärbung der Rohpapier können anorganische Farbpigmente wie Metalloxide, Metall Hydroxide und Metalloxid Hydrate, Metall Sulfide, Metallsulfate, Metallchromate und Metallmolybdate sowie organische Farbpigmente und/oder Farbstoffe wie zum Beispiel Carbonylfarbmittel, Cyaninfarbmittel und andere eingesetzt werden.

In einer bevorzugten Ausführungsform ist das vorliegend zu bedruckende Rohpapier mindestens eine Papierbahn ohne Imprägnierung mit mindestens einer Tintenaufnahmeschicht. Bei der Tintenaufnahmeschicht handelt es sich bevorzugt um eine hydrophile Beschichtung, die wasserlösliche oder wasserdispergierbare Polymere bzw. Bindemittel sowie anorganische Pigmente enthält.

Als Bindemittel können beispielsweise Polyvinylalkohol, Polyvinylpyrrolidon, Polyvinylacetat, Stärke, Gelatine, Carboxymethylcellulose, Ethylen/Vinylacetat, Styrol/Acrylsäureester Copolymere oder deren Gemische verwendet werden.

Als anorganische Pigmente können in der tintenaufnehmenden Schicht anorganische weiße Pigmente wie Silikate, Kaolin, Kalziumkarbonat, Aluminiumhydroxid, Talkum, Titandioxid oder Farbpigmente wie Eisenoxid, Russ, oder organische Farbpigmente enthalten sein. Das Verhältnis von Pigment zu Bindemittel in der tintenaufnehmenden Schicht liegt zwischen 1 :0,05-1 :1 bezogen auf den Feststoffgehalt.

In einer bevorzugten Ausführungsform enthält die tintenaufnehmende Schicht Silikate, Aluminiumoxide, Aluminiumhydroxide oder Aluminiumsilikate und als wasserlösliches polymeres Bindemittel Polyvinylalkohol.

Das Flächengewicht der tintenaufnehmenden Schicht kann zwischen 0,5 - 20 g/m² betragen.

In einer weiteren Ausführungsform ist das mindestens eine zu bedruckende Trägermaterial mindestens ein vorbehandeltes, imprägniertes Papier. Unter einem vorbehandelten Papier (oder Zelluloselage) ist dabei ein Papier oder eine Papierbahn zu verstehen, die mit einer Harzlösung imprägniert ist. Das Papier kann mit verschiedensten Harzlösung getränkt sein, beispielsweise Melaminharze und Harnstoffharze, Kunststoff-Acrylat-Verbindungen oder Stärke-Beleimung. Es können auch Gemische der Harze vorliegen. Es ist auch möglich, das Papier unter Verwendung von Harzpulver zu imprägnieren. Die Verwendung von Harzpulver ist weiter unten im Detail beschrieben.

In einer bevorzugten Ausführungsvariante wird ein imprägniertes Papier verwendet, welches mit den folgenden Verfahrensschritten (siehe auch EP 2 980 313 A1) bereitgestellt wird: a) vollständiges Tränken der Zelluloselage mit einem härtbaren Harz, z.B. MelaminFormaldehydharz), b) Entfernen des sich auf der Oberfläche ausbildenden überschüssigen Harzes (z.B. durch Abziehen oder Abrakeln), c) Trocknen der getränkten Zelluloselage derart, dass nach dem Verdunsten des Wassers aus dem Harz die Zellulosefaser auf der Oberfläche, von der das Harz entfernt wurde zumindest teilweise freiliegen.

Durch das Abziehen oder Abrakeln schließt das auf der Oberfläche der Zelluloselage verbleibende Harz mit den Faserspitzen ab. Im Trocknungsprozess zieht sich das Harz in die Fasern zurück, so dass die Fasern mit dem Harz getränkt sind aber nicht vom Harz eingeschlossen. Eine derartige Oberfläche ist zum Bedrucken mit wässrigen Digitaldrucktinten geeignet.

Die für das Abziehen bzw. Abrakeln verwendete Spezialeinrichtung funktioniert ähnlich wie eine Spachtelmaschine bei der eine oder mehrere Walzen auf dem Papier rückwärts laufen und das überschüssige Harz aufnehmen. Durch unterschiedliche Geschwindigkeiten der Walzen kann die Menge genau gesteuert und eine Wiederholbarkeit gewährleistet werden.

Zur Verbesserung des Druckergebnisses kann das behandelte Papier (Rohpapier ohne oder mit Tintenaufnahmeschicht, imprägniertes Papier) zusätzlich mit einem Primermaterial versehen sein.

Als Primermaterial kann eine wasserbasierende Kunstharz- oder Acrylatharz-Dispersion verwendet werden, die vollständig mit Wasser mischbar oder in Wasser teilweise lösbar ist. Das Primermaterial sollte einen niedrigen Lösungsmittelgehalt von unter 3 % aufweisen.

Wie oben bereits angedeutet, wird das Druckdekor im Direktdruck mittels eines Digitaldruckverfahrens unter Verwendung der oben beschriebenen CRYK-Tinte auf das Trägermaterial aufgebracht. Beim Digitaldruck wird das Druckbild direkt von einem Computer in eine Druckmaschine, wie z.B. einen Tintenstrahldrucker übertragen. Die Dekordaten werden von einer Software in Maschinendaten übersetzt (z.B. RIP-Software vom Hersteller Colorgate).

Die bedruckten Papiere (Rohpapier oder imprägniertes Papier) können nach dem Bedrucken mit einer Harzschicht als Schutzschicht versehen werden. Diese Schutzschicht kann aus einem noch nicht vollständig ausgehärteten Harz, bevorzugt ein Formaldehyd-haltiges Harz, insbesondere bevorzugt Melamin-Formaldehyd-Harz, Harnstoff-Formaldehyd-Harz und/oder Melamin-Harnstoff-Formaldehyd-Harz, bestehen. Diese Schutzschicht dient dem Schutz der Druckdekors und ermöglicht eine Zwischenlagerung.

Wie erwähnt sollte die aufgetragene Schutzschicht noch nicht vollständig ausgehärtet sein, was insbesondere durch den Trocknungsprozess gesteuert wird.

Insbesondere müssen unabhängig vom Verwendungszweck alle imprägnierten Papiere einen Restfeuchtgehalt besitzen. Dieser ermöglicht unabhängig von der Art der Weiterverarbeitung (Kurztakt-, Conti- oder Mehretagenpresse) das Entstehen von qualitativ einwandfreien Produkten. Die Restfeuchte ist ein Indiz für den Vernetzungsgrad der eingesetzten Kunstharze.

Die zur Imprägnierung von Papierlagen (oder auch zur Direktbeschichtung von anderen Trägerplatten, siehe weiter unten) verwendeten Harze durchlaufen in diesen Prozessen verschiedene Polymerisations- und Vernetzungszustände.

Dies sei im Folgenden anhand des häufig in der Holzwerkstoffplatten-Herstellung zum Einsatz kommenden Melamin-Formaldehyd-Harzes dargestellt.

Melamin und Formaldehyd reagieren zunächst unter Ausbildung von Methylolgruppen an den Aminogruppen des Melamins zu wasserlöslichen Produkten (siehe Schema I).

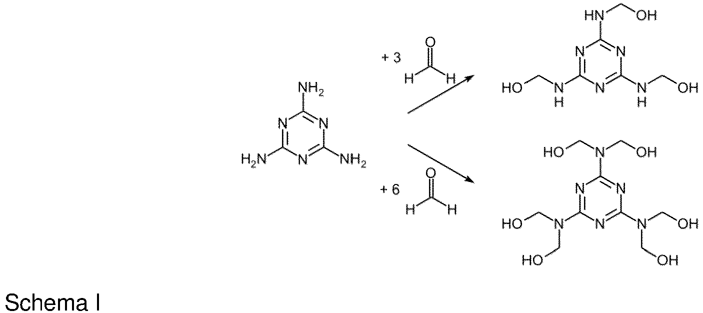

Diese Melamin-Formaldehyd-Monomere unterliegen nach Zugabe eines geeigneten Katalysators, bevorzugt einer Säure, der Polykondensation, wobei es zur Verknüpfung der Monomere über Ether- und Methylengruppen und zur Ausbildung von höhermolekularen Prekondensaten und Polykondensaten kommt (siehe Schema II).

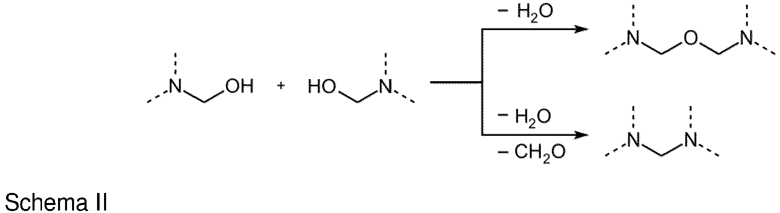

Prekondensate und Polykondensate unterscheiden sich hinsichtlich ihrer Molmasse und ihrer Löslichkeit. So können die niedermolekularen Prekondensate noch über eine begrenzte Wasserlöslichkeit verfügen, während die höhermolekularen Polykondensate unlöslich sind. Die begrenzte Wasserlöslichkeit der Prekondensate ist u.a. durch noch freie Methylolgruppen und den geringen Vernetzungsgrad der meist noch linearen Oligomere bedingt. Die Prekondensate sind somit ein Polymerisationszwischenprodukt.

Bei einer vollständigen Härtung der Polykondensate kommt es zu einer starken Vernetzung unter Abspaltung der noch vorhandenen Methylolgruppen, wobei sich über Methylengruppen engmaschig vernetzte Kunststoffe ausbilden (siehe Schema III).

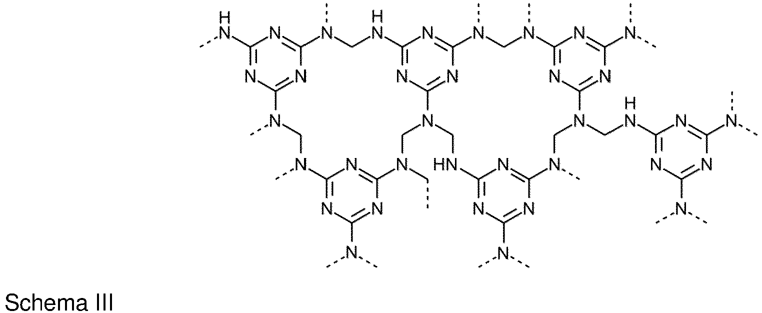

Bei über Kondensationsreaktionen aushärtenden Kunstharzen werden daher folgende Harzzustände unterschieden:
- A-Zustand: leicht in Lösemittel löslich, schmelzbar, härtbar;
- B-Zustand: nur noch teilweise in Lösemittel löslich, schmelzbar, härtbar;
- C-Zustand: unlöslich, ausgehärtet

Im Falle der Verwendung von imprägnierten Papierlagen zur Veredlung von Holzwerkstoffplatten z.B. zu hochwertigeren Fußbodenpaneelen ist es wünschenswert, dass das Imprägnierharz noch nicht vollständig ausgehärtet ist, sondern sich bevorzugt noch im teilvernetzten B-Zustand befindet. Dies ermöglicht bei der Weiterverarbeitung in der Presse noch ein Fließen/Verfilmen in Kombination mit der Weitervernetzung der Kunstharze. Entsprechend werden die vorliegend imprägnierten und bedruckten Papiere bevorzugt bis zum Zusatnd B getrocknet.

Das bedruckte und ggfs. beschichtete bzw. imprägnierte Papier kann anschließend mit einer Werkstoffplatte, mindestens einem Schutzpapier (Overlay) und ggfs. einem Gegenzugpapier verpresst werden.

In einer weiteren Ausführungsform ist das mindestens eine zu bedruckende Trägermaterial mindestens eine Werkstoffplatte, insbesondere eine Holzwerkstoffplatte, wie MDF- und HDF-Platten aus Holzfasern, Spanplatten aus Spänen, OSB aus Holzstrands, wobei die Holzfasern, Holzspäne und Holzstrands jeweils mit geeigneten Klebstoffen vermischt und heiß verpresst werden), WPC-Platten, Kunststoffplatte, z.B. SPC (stone plastic composite) oder eine Zementfaserplatte ist. Zum Direktdruck geeignet sind z.B. Trägermaterialien wie Holzwerkstoffe, Holzwerkstoff-Kunststoff-Gemische, WPC, Kunststoffe oder Gemische verschiedener Kunststoffe, beispielsweise PE, PP, PVC, PU, alle auch mit Füllstoffen, wie Kreide, Talkum oder auch Fasern.

In einer Ausführungsvariante kann die Oberfläche der Werkstoffplatte vor dem Bedrucken zur Verbesserung der Haftung der nachfolgenden Schichten vorbehandelt werden. Dies kann eine Reinigung mit Bürsten, ein Anschliff, der die Oberfläche auch von Unebenheiten befreit, und/oder eine Plasma- oder Coronabehandlung sein.

In einer Ausführungsform kann auch eine ungeschliffene Holzwerkstoffplatte, insbesondere MDF oder HDF, verwendet werden, die auf der Oberseite noch mit einer Presshaut (Verrottungsschicht) versehen ist. Es wird wässriges Melaminharz auf die Oberseite aufgebracht, um die Presshaut zu füllen. Das Melaminharz wird später in der Kurztaktpresse aufgeschmolzen und wirkt damit vergütend im Bereich dieser Schicht; d.h. es wirkt einer Delaminierung entgegen.

In einer bevorzugten Ausführungsform wird in einem nächsten Schritt mindestens eine Grundierung zur Erhöhung der Deckkraft aufgetragen.

Die Grundierung umfasst bevorzugt Kasein, Maisstärke oder Sojaprotein und kann anorganische Farbpigmente enthalten und somit als Grundierungsschicht für die anschließend aufzudruckende Dekorschicht dienen.

Als Farbpigmente können wiederum weiße Pigmente wie Titandioxid TiO₂ verwendet werden. Weitere Farbpigmente können Calciumcarbonat, Bariumsulfat oder Bariumcarbonat, aber auch Eisenoxidpigmente (für eine bräunliche Grundierung) sein. Die Grundierung kann neben den Farbpigmenten und dem Kasein, der Maisstärke oder Sojaprotein noch Wasser als Lösemittel enthalten.

Die Menge der aufgetragenen flüssigen Grundierung kann zwischen 10 und 50 g/m², bevorzugt zwischen 15 und 30 g/m², insbesondere bevorzugt zwischen 20 und 25 g/m² liegen.

Es ist ebenfalls denkbar, dass die Grundierung aus mindestens einer, bevorzugt aus mindestens zwei oder mehreren nacheinander aufgetragenen Lagen bzw. Aufträgen besteht (z.B. bis zu fünf Aufträgen), wobei die Auftragsmenge zwischen den Lagen bzw. Aufträgen gleich oder verschieden ist, d.h. die Auftragsmenge einer jeden einzelnen Lagen kann variieren.

Die Grundierung kann unter Verwendung einer Walze auf die Werkstoffträgerplatte mit anschließender Trocknung aufgebracht werden. Es ist auch möglich, die Grundierung mittels Digitaldruck auf die Werkstoffplatte aufzubringen. Hierbei werden bevorzugt wasserbasierte mit weißen Farbpigmenten angereicherte Tinten verwendet, die passend zu den nachfolgend verwendeten Digitaldrucktinten sind. Ein Auftrag mittels Digitaldruck ist vorteilhaft, da die Druckanlage deutlich kürzer ist als eine Walzvorrichtung und somit Platz, Energie und Kosten spart.

In einer weiteren Ausführungsvariante des vorliegenden Verfahrens wird auf die Grundierung eine Primerschicht, bevorzugt als Einmalauftrag mit anschließender Trocknung, aufgebracht. Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Im Anschluss an das Bedrucken der grundierten Werkstoffplatte im Digitaldruck unter Verwendung der oben beschriebenen CMYK oder CRYK Tinte kann die Dekorschicht ebenfalls (wie bereits oben für die Papiere beschrieben) mit einer Schutzschicht versehen werden.

Diese Schutzschicht kann ein Formaldehyd-haltiges Harz (im B-Zustand, siehe oben), insbesondere ein Melamin-Formaldehyd-Harz, Harnstoff-Formaldehyd-Harz oder Melamin-Harnstoff-Formaldehyd-Harz sein oder ein Gemisch der Harze und Glaskugeln (Größe 50-150 µm) als Abstandshalter für eine optionale Zwischenlagerung der Platten enthalten. Diese Schutzschicht dient einem vorläufigen Schutz der Dekorschicht zur Lagerung vor der weiteren Veredelung. Die Schutzschicht auf der Dekorschicht ist noch nicht vollständig ausgehärtet, sondern mit einer gewissen Restfeuchte von ca. 10%, bevorzugt von ca. 6%, versehen und noch weiter vernetzbar. Im Falle einer Zwischenlagerung verharrt das Harz somit im Zustand B (noch nicht vollständig ausgehärtet und vernetzt), wobei das Dekor geschützt wird. Die Glaskugeln können dem Harz beigegeben oder aufgestreut werden und fungieren als Abstandhalter. Derartige Schutzschichten sind z.B. in der WO 2010/112125 A1 oder EP 2 774 770 B1 beschrieben.

Alternativ dazu geht es direkt zum nächsten Bearbeitungsschritt.

In einer weitergehenden Ausführungsvariante wird auf die die bedruckte Werkstoffplatte (mit oder ohne Schutzschicht) mindestens eine Verschleißschutzschicht aufgetragen.

Diese Verschleißschutzschicht kann aus einer oder mehreren Lagen, z.B. drei, vier, fünf oder sechs Lagen bestehen.

Die Trocknung der Harzschichten erfolgt bei Trockner-Temperaturen zwischen 150 und 220°C, bevorzugt zwischen 180 und 210°C, insbesondere in einem Konvektionstrockner.

In dem sich an den (letzten) Trocknungsschritt anschließenden Pressschritt erfolgt ein Verpressen des Schichtaufbaus unter Druck- und Temperatureinfluss in einer Kurztaktpresse bei Temperaturen zwischen 150 und 250°C, bevorzugt zwischen 180 und 230°C, insbesondere bevorzugt bei 200°C und einem Druck zwischen 30 und 60 kg/cm², insbesondere bevorzugt zwischen 40 und 50 kg/cm². Die Presszeit liegt zwischen 5 bis 15 sec, bevorzugt zwischen 7 bis 10 sec. Im Vergleich dazu: bei Dekorpapieren wird ein Druck von 50-60 kg/cm² für 16 sec angelegt.

Bevorzugt wird die beschichtete Werkstoffplatte in der Kurztaktpresse zu einem in der Kurztaktpresse befindlichen strukturierten Pressblech anhand von Markierungen auf der Holzwerkstoffplatte ausgerichtet, so dass eine Deckungsgleichheit zwischen dem Dekor auf der Holzwerkstoffplatte und der einzuprägenden Struktur des Pressbleches hergestellt wird. Dies ermöglicht die Herstellung einer dekorsynchronen Struktur. Während des Verpressens kommt es zu einer Aufschmelzung der Melaminharzschichten und Ausbildung eines Laminats durch Kondensationsreaktion unter Einschluss der Bestandteile Korund/Glas/Fasern.

Die Erfindung wird nachfolgend unter Bezugnahme auf die Figuren der Zeichnungen an einem Ausführungsbeispiel näher erläutert. Es zeigen:
- Figur 1: ein erstes NIR-Spektrum zur Bestimmung der Farbabweichung gemäß einem ersten Ausführungsbeispiel; und
- Figur 2: ein zweites NIR-Spektrum zur Bestimmung der Farbabweichung gemäß einem zweiten Ausführungsbeispiel.

### Ausführungsbeispiel 1:

Mit Hilfe eines Digitaldruckers wurde ein Holzdekor ( D4727, Esche grau ) als Urmuster gedruckt. Danach wurden mit Hilfe der Software gezielt Farbabweichungen erzeugt (95% und 87%), wodurch der rötliche Farbton immer weniger ausgeprägt war. Diese Farbabweichungen wurden zusammen mit dem Urmuster mit Hilfe eines NIR-Messkopfes vermessen. Dabei wurde der NIR-Messkopf immer an einer identischen Stelle im Druck positioniert.

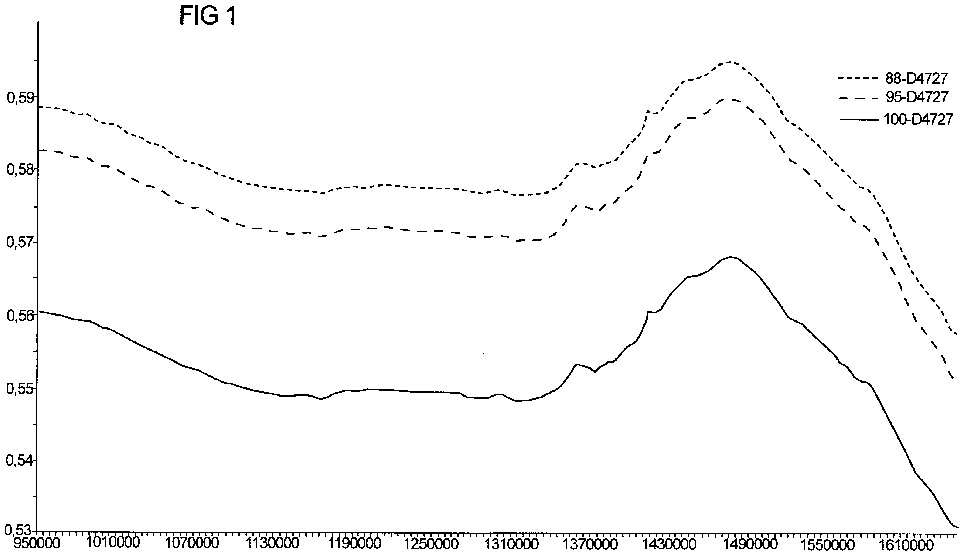

Wie in dem Diagramm der Figur 1 zu entnehmen ist, ist ein deutlicher Abstand zwischen dem Urmuster (100%) und den beiden Mustern mit den Farbabweichungen zu erkennen. Während das Muster mit der Bezeichnung 95-D4727 noch akzeptabel ist, ist für das Muster mit der Bezeichnung 87-D4727 eine deutliche Abweichung in der Prüfkabine unter Normlicht (z. B. Normlichtart D65 gemäß ISO 3668, ASTM 1729 sowie DIN 6173-2) erkennbar.

### Ausführungsbeispiel 2:

An einem Digitaldrucker wurde ein Holzdekor ( D4727, Esche grau ) als Urmuster kontinuierlich gedruckt. Ein Messkopf wurde an einer festgelegten Stelle über dem Druck positioniert. Dieser Messkopf nahm kontinuierlich NIR-Spektren des Dekors (Urmuster) auf. Aus diesen Einzelspektren wurde dann ein Mittelwert-Spektrum errechnet. Danach wurde mit Hilfe der Software gezielt eine Farbabweichung an diesem Dekor erzeugt, wodurch der rötliche Farbton immer weniger ausgeprägt war. Es wurden wieder während der Produktion dieser "Farbabweichungen" an derselben Stelle am Digitaldrucker NIR-Spektren aufgenommen. Aus den Einzelspektren wurde ein Mittelwert-Spektrum errechnet und mit dem Mittelwert-Spektrum des Urmusters verglichen.

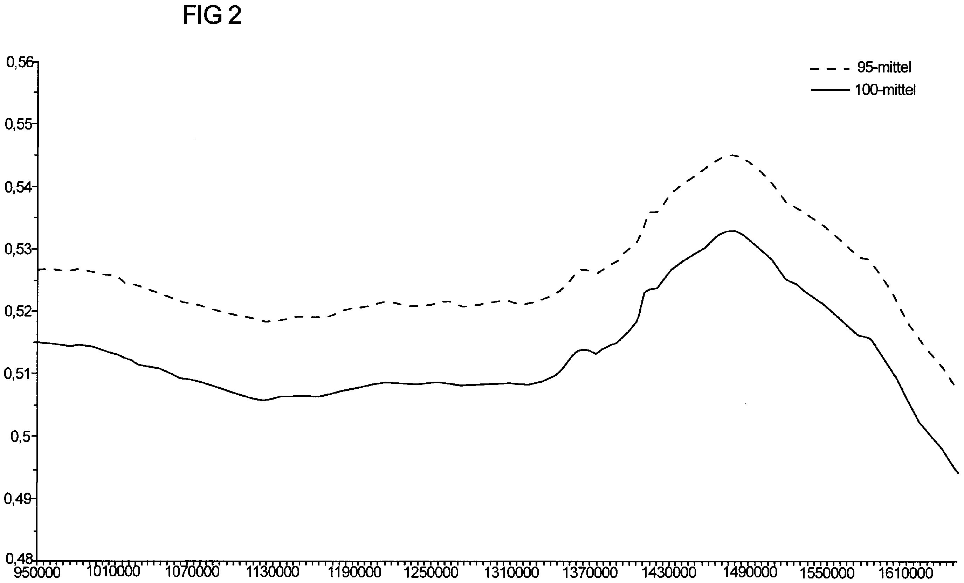

Wie aus dem Diagramm der Figur 2 zu entnehmen ist, ist eine kontinuierliche Qualitätskontrolle an einer Druckmaschine mit Hilfe von einem NIR-Messkopf möglich.

Wie bereits erwähnt kann dieses Verfahren sowohl im indirekten Tiefdruck als auch im Digitaldruck zur Anwendung kommen. Dabei kann natürlich auch ein anderes Trägermaterial, wie Holzwerkstoffplatten, Folien, Vorimprägnate usw., zur Anwendung kommen. Einzige Voraussetzung ist, dass die verwendeten Farben auf organischen Molekülen beruhen.

Dabei kann für jedes Dekor bei der Entwicklung gezielt bereits ein Range für Farbabweichungen definiert werden oder im Rahmen der Erstproduktionen können Farbabweichungen detektiert und bezüglich ihrer Sichtbarkeit beurteilt werden.

## Patentansprüche

1. Verfahren zur Bestimmung der Farbabweichung von mindestens einem auf mindestens einem Trägermaterial aufgebrachten Druckdekor von einer Druckvorlage umfassend die Schritte
- Aufnahme von mindestens einem NIR-Spektrum von mehreren Referenzproben mit der Druckvorlage unter Verwendung von mindestens einem NIR-Messkopf in einem Wellenlängenbereich zwischen 900 nm und 2500 nm,
- Aufbringen von dem mindestens einen Druckdekor auf das mindestens eine Trägermaterial mittels Bedrucken,
- Aufnehmen von mindestens einem NIR-Spektrum des mit dem Druckdekor bedruckten Trägermaterials unter Verwendung des mindestens einen NIR-Messkopfes in einem Wellenlängenbereich zwischen 900 nm und 2500 nm, und
- Bestimmen der Farbabweichung des Druckdekors von der Druckvorlage in einem Wellenlängenbereich zwischen 1350 und 1600 nm bei einer parallelen Verschiebung der gemessenen NIR-Spektren des Druckdekors von den gemessenen NIR-Spektren der Druckvorlage , oder
- Bestimmen der Farbabweichung des Druckdekors von der Druckvorlage in verschiedenen Wellenlängenbereichen, wobei der Wellenlängenbereich des Druckdekors zwischen 1100 und 1200 nm und der Wellenlängenbereich der Druckvorlage zwischen 1400 und 1600 nm liegt.

2. Verfahren nach Anspruch 1, **dadurch gekennzeichnet, dass** die Bestimmung der Farbabweichung kontinuierlich und online oder offline erfolgt.

3. Verfahren nach einem der vorhergehenden Ansprüche, **dadurch gekennzeichnet, dass** das mindestens eine Trägermaterial mindestens eine Papierlage, insbesondere mindestens ein Rohpapier oder mindestens ein vorbehandeltes, imprägniertes Papier, umfasst.

4. Verfahren nach einem der vorhergehenden Ansprüche, **dadurch gekennzeichnet, dass** das mindestens eine Trägermaterial eine Platte aus einem Holzwerkstoff, insbesondere eine Span-, mitteldichte Faser (MDF)-, hochdichte Faser (HDF)-, Orientierte Grobspan(OSB)- oder Sperrholzplatte, aus Kunststoff, einem Holzwerkstoff-Kunststoff-Gemisch oder einem Verbundwerkstoff, eine Zementfaserplatte, Gipsfaserplatte oder eine WPC-Platte (Wood Plastic Composites) oder eine SPC-Platte (Stone Plastic Composites) ist.

5. Verfahren nach einem der vorhergehenden Ansprüche, **dadurch gekennzeichnet, dass** das Druckdekor in Tiefdruckverfahren oder Digitaldruckverfahren auf das mindestens eine Trägermaterial aufgebracht wird.

6. Verfahren nach einem der vorhergehenden Ansprüche, **dadurch gekennzeichnet, dass** die für den Druck verwendete Tinte eine wasserlösliche CMYK Tinte ist.

7. Verfahren nach einem der Ansprüche 1-5, **dadurch gekennzeichnet, dass** die für den Druck verwendete Tinte eine wasserlösliche CRYK Tinte ist, die die folgende Zusammensetzung aufweist:
- Farbbestandteil C: mindestens ein Cyanpigment;
- Farbbestandteil K: mindestens ein schwarzes Kohlenstoffpigment;
- Farbbestandteil Y: mindestens ein gelbes Pigment; oder eine Mischung aus mindestens zwei verschiedenen gelben Pigmenten oder eine Mischung aus mindestens einem gelben Pigment und mindestens einem roten Pigment;
- Farbestandteil R: mindestens ein rotes Pigment, oder eine Mischung aus mindestens zwei verschiedenen roten Pigmenten oder eine Mischung aus mindestens einem roten Pigment und mindestens einem gelben Pigment.

8. Verfahren nach Anspruch 7, **dadurch gekennzeichnet, dass** der Farbbestandteil Y eine Mischung aus zwei gelben Pigmenten oder eine Mischung aus einem gelben Pigment und einem roten Pigment oder eine Mischung aus zwei gelben Pigmenten und einem roten Pigment ist.

9. Verfahren nach einem der Ansprüche 7-8, **dadurch gekennzeichnet, dass** der Farbbestandteil R eine Mischung aus zwei roten Pigmenten oder eine Mischung aus einem roten Pigment und einem gelben Pigment oder Mischung aus zwei roten Pigmenten und einem gelben Pigment ist.

10. Verfahren nach einem der Ansprüche 7-9, **dadurch gekennzeichnet, dass** das mindestens eine Cyanpigment ein Kupferphthalocyaninpigment ist, bevorzugt C.I. Pigment Blue 15:3 oder C.I. Pigment Blue 15:4, insbesondere bevorzugt C.I. Pigment Blue 15:3 ist.

11. Verfahren nach einem der Ansprüche 7-10, **dadurch gekennzeichnet, dass** das schwarze Kohlenstoffpigment ein Russpigment ist, insbesondere ausgewählt aus der Gruppe Regal^{™} 400R, Mogul^{™}, L, Elftex^{™} 320 from Cabot Co., or Carbon Black FW18, Special Black^{™} 250, Special Black^{™} 350, Special Black^{™} 550, Printex^{™} 25, Printex^{™} 35, Printex^{™} 55, Printex^{™} 90, Printex^{™} 150T from DEGUSSA Co., MA8 from MITSUBISHI CHEMICAL Co., and C.I. Pigment Black 7 and C.I. Pigment Black 11 ist.

12. Verfahren nach einem der Ansprüche 7-11, **dadurch gekennzeichnet, dass** der Wasseranteil in der Tinte bei mindestens 50% liegt, bevorzugt bei mindestens 55% liegt.

13. Verfahren nach einem der Ansprüche 7 -12, **dadurch gekennzeichnet, dass** die Tinte mindestens ein organisches Lösemittel mit einem Anteil von weniger als 45%, bevorzugt von weniger als 43% enthält.

## Claims

1. Method for determining the colour deviation of at least one print decoration applied to at least one carrier material from a print template
Comprising the steps
- Recording of at least one NIR spectrum of several reference samples with the print template using at least one NIR measuring head in a wavelength range between 900 nm and 2500 nm,
- Applying the at least one printed decoration to the at least one carrier material by means of printing,
- recording at least one NIR spectrum of the carrier material printed with the print decoration using the at least one NIR measuring head in a wavelength range between 900 nm and 2500 nm, and
- Determining the colour deviation of the print decor from the print template in a wavelength range between 1350 and 1600 nm with a parallel shift of the measured NIR spectra of the print decor from the measured NIR spectra of the print template, or
- Determining the colour deviation of the print decor from the print template in different wavelength ranges, where the wavelength range of the print decor is between 1100 and 1200 nm and the wavelength range of the print template is between 1400 and 1600 nm.

2. Method according to claim 1, **characterized in that** the determination of the colour deviation is carried out continuously and online or offline.

3. Method according to one of the preceding claims, **characterized in that** the at least one carrier material comprises at least one paper layer, in particular at least one base paper or at least one pre-treated, impregnated paper.

4. Method according to one of the preceding claims, **characterized in that** the at least one carrier material is a board made of a wood material, in particular a chipboard, medium-density fibreboard (MDF), high-density fibreboard (HDF), oriented strand board (OSB) or plywood board, made of plastic, a wood material-plastic mixture or a composite material, a cement fibreboard, gypsum fibreboard or a WPC board (Wood Plastic Composites) or an SPC board (Stone Plastic Composites).

5. Method according to one of the preceding claims, **characterized in that** the printed decoration is applied to the at least one carrier material by gravure printing processes or digital printing processes.

6. Method according to one of the preceding claims, **characterized in that** the ink used for printing is a water-soluble CMYK ink.

7. Method according to one of claims 1-5, **characterized in that** the ink used for printing is a water-soluble CRYK ink having the following composition:
- Colour component C: at least one cyan pigment;
- Colour component K: at least one black carbon pigment;
- Colour component Y: at least one yellow pigment; or a mixture of at least two different yellow pigments or a mixture of at least one yellow pigment and at least one red pigment;
- Colour component R: at least one red pigment, or a mixture of at least two different red pigments, or a mixture of at least one red pigment and at least one yellow pigment.

8. Method according to claim 7, **characterized in that** the colour component Y is a mixture of two yellow pigments or a mixture of a yellow pigment and a red pigment or a mixture of two yellow pigments and a red pigment.

9. Method according to one of claims 7-8, **characterized in that** the colour component R is a mixture of two red pigments or a mixture of a red pigment and a yellow pigment or mixture of two red pigments and a yellow pigment.

10. Method according to one of claims 7-9, **characterized in that** the at least one cyan pigment is a copper phthalocyanine pigment, preferably C.I. Pigment Blue 15:3 or C.I. Pigment Blue 15:4, more preferably C.I. Pigment Blue 15:3.

11. Method according to one of claims 7-10, **characterized in that** the black carbon pigment is a carbon black pigment, in particular selected from the group consisting of Regal^{™} 400R, Mogul^{™}, L, Elftex^{™} 320 from Cabot Co, or Carbon Black FW18, Special Black^{™} 250, Special Black^{™} 350, Special Black^{™} 550, Printex^{™} 25, Printex^{™} 35, Printex^{™} 55, Printex^{™} 90, Printex^{™} 150T from DEGUSSA Co., MA8 from MITSUBISHI CHEMICAL Co., and C.I. Pigment Black 7 and C.I. Pigment Black 11.

12. Method according to one of claims 7-11, **characterized in that** the water content in the ink is at least 50%, preferably at least 55%.

13. Method according to one of claims 7 -12, **characterized in that** the ink contains at least one organic solvent at a level of less than 45%, preferably less than 43%.

## Revendications

1. Procédé de détermination de l'écart de couleurs d'au moins un motif décoratif imprimé, appliqué sur au moins un matériau de support, d'une maquette d'impression, comprenant les étapes
- d'enregistrement d'au moins un spectre NIR de plusieurs échantillons de référence avec la maquette d'impression en utilisant au moins une tête de mesure NIR dans une plage de longueurs d'onde entre 900 nm et 2500 nm,
- d'application de l'au moins un motif décoratif imprimé sur l'au moins un matériau de support au moyen d'une impression,
- d'enregistrement d'au moins un spectre NIR du matériau de support imprimé du motif décoratif imprimé en utilisant l'au moins une tête de mesure NIR dans une plage de longueurs d'onde entre 900 nm et 2500 nm, et
- de détermination de l'écart de couleurs du motif décoratif imprimé de la maquette d'impression dans une plage de longueurs d'onde entre 1350 et 1600 nm lors d'un déplacement parallèle des spectres NIR mesurés du motif décoratif imprimé par rapport aux spectres NIR mesurés de la maquette d'impression, ou
- de détermination de l'écart de couleurs du motif décoratif imprimé de la maquette d'impression dans différentes plages de longueurs d'onde, dans lequel la plage de longueurs d'onde du motif décoratif imprimé se situe entre 1100 et 1200 nm et la plage de longueurs d'onde de la maquette d'impression se situe entre 1400 et 1600 nm.

2. Procédé selon la revendication 1, **caractérisé en ce que** la détermination de l'écart de couleurs est effectuée en continu et en ligne ou hors ligne.

3. Procédé selon l'une quelconque des revendications précédentes, **caractérisé en ce que** l'au moins un matériau de support comprend au moins une couche de papier, en particulier au moins un papier brut ou au moins un papier imprégné prétraité.

4. Procédé selon l'une quelconque des revendications précédentes, **caractérisé en ce que** l'au moins un matériau de support est un panneau en un matériau dérivé du bois, en particulier un panneau de particules, un panneau MDF (de fibres à densité moyenne), un panneau HDF (de fibres à densité élevée), un panneau OSB (à plaques de fibres orientées) ou un panneau de contreplaqué, en matière plastique, en un mélange de matériau dérivé du bois et de matière plastique ou en un matériau composite, un panneau de fibres de ciment, un panneau de plâtre renforcé de fibres ou un panneau WPC (en composite bois-plastique) ou un panneau SPC (en composite pierre-plastique).

5. Procédé selon l'une quelconque des revendications précédentes, **caractérisé en ce que** le motif décoratif imprimé est appliqué sur l'au moins un matériau de support dans des procédés d'héliogravure ou des procédés d'impression numérique.

6. Procédé selon l'une quelconque des revendications précédentes, **caractérisé en ce que** l'encre utilisée pour l'impression est une encre CMYK soluble dans l'eau.

7. Procédé selon l'une quelconque des revendications 1 - 5, **caractérisé en ce que** l'encre utilisée pour l'impression est une encre CRYK soluble dans l'eau, qui présente la composition suivante :
- composant de couleur C : au moins un pigment cyan ;
- composant de couleur K : au moins un pigment noir de carbone ;
- composant de couleur Y : au moins un pigment jaune, ou un mélange d'au moins deux pigments jaunes différents ou un mélange d'au moins un pigment jaune et d'au moins un pigment magenta ;
- composant de couleur R : au moins un pigment magenta, ou un mélange d'au moins deux pigments magenta différents ou un mélange d'au moins un pigment magenta et d'au moins un pigment jaune.

8. Procédé selon la revendication 7, **caractérisé en ce que** le composant de couleur Y est un mélange de deux pigments jaunes ou un mélange d'un pigment jaune et d'un pigment rouge ou un mélange de deux pigments jaunes et d'un pigment magenta.

9. Procédé selon l'une quelconque des revendications 7 - 8, **caractérisé en ce que** le composant de couleur R est un mélange de deux pigments magenta ou un mélange d'un pigment magenta et d'un pigment jaune ou un mélange de deux pigments magenta et d'un pigment jaune.

10. Procédé selon l'une quelconque des revendications 7 - 9, **caractérisé en ce que** l'au moins un pigment cyan est un pigment de phtalocyanine de cuivre, de manière préférée un pigment C.I. bleu 15:3 ou un pigment C.I. bleu 15:4, en particulier de manière préférée un pigment C.I. bleu 15:3.

11. Procédé selon l'une quelconque des revendications 7 - 10, **caractérisé en ce que** le pigment noir de carbone est un pigment de suie, en particulier choisi parmi le groupe Regal^{™} 400R, Mogul^{™}, L, Elftex^{™} 320 de Cabot Co., ou Carbon Black FW18, Spécial Black^{™} 250, Spécial Black^{™} 350, Spécial Black^{™} 550, Printex^{™} 25, Printex^{™} 35, Printex^{™} 55, Printex^{™} 90, Printex^{™} 150T de DEGUSSA Co., MA8 de MITSUBISHI CHEMICAL Co., et C.I. Pigment Black 7 et C.I. Pigment Black 11.

12. Procédé selon l'une quelconque des revendications 7 - 11, **caractérisé en ce que** la teneur en eau dans l'encre est de l'ordre d'au moins 50 %, de manière préférée de l'ordre d'au moins 55 %.

13. Procédé selon l'une quelconque des revendications 7 - 12,
**caractérisé en ce que** l'encre contient au moins un solvant organique avec une proportion inférieure à 45 %, de manière préférée inférieure à 43 %.
